(19) **Europäisches Patentamt / European Patent Office / Office européen des brevets**

(11) **EP 4 582 992 A1**

(12) **EUROPEAN PATENT APPLICATION**

(43) Date of publication:
09.07.2025 Bulletin 2025/28

(21) Application number: 24176681.5

(22) Date of filing: 17.05.2024

(51) International Patent Classification (IPC):
**G06F 30/17** (2020.01)  **G06F 30/27** (2020.01)
**G06N 3/045** (2023.01)  **G06N 3/08** (2023.01)
**G06F 119/14** (2020.01)  **G06F 119/08** (2020.01)

(52) Cooperative Patent Classification (CPC):
**G06F 30/27; G06F 30/17; G06N 3/045; G06N 3/08;**
G06F 2119/08; G06F 2119/14

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 04.01.2024 EP 24150427

(71) Applicant: **Siemens Energy Global GmbH & Co.
KG**
**81739 München (DE)**

(72) Inventors:
• **Nouri, Behnam**
**10627 Berlin (DE)**
• **Ali, Sazeed**
**13357 Berlin (DE)**

(54) **METHOD OF GENERATING AN ENGINEERING COMPONENT, AND METHOD OF SAVING 3D FIELD DATA FROM SIMULATIONS OR MEASUREMENTS**

(57)    Method of generating an engineering component, and method of saving 3D field data from simulations or measurements

The invention relates to a method of storing 3D field data, the method comprising the following steps:

S1 - Obtaining 3D field data related to a first group of specimens of a parameterizable engineering component, the 3D field data comprising geometry data;

S2 - Defining a set of geometry parameters of the specimens;

S3 - Training a variational auto encoder model (VAE) to compress the 3D field data to a latent space and restore it, and then splitting the VAE into an encoder model and a decoder model, wherein learned nodal weights of the encoder model and decoder model are set permanent for the further steps of the method;

S4 - Connecting a multilayer perceptron network model (MLP) to an input layer of the decoder model of the VAE to form a Hybrid Multilayer Perceptron - Variational Autoencoder model (MLP-VAE) ;

S5 - Training the MLP-VAE to map the set of geometry parameters to the 3D field data; and

S6 - Storing the latent space in a storage medium.

FIG 6

**Description**

The present invention relates to methods of generating engineering components, and to methods of saving 3D field data from simulations or measurements.

Background

To a large extent, methods of generation of engineering components involve conducting measurements, parameter studies, and simulations in the laboratory and using computer-based engineering systems to optimise the performance and, more specifically, the geometry of such components.

Such steps generate an enormous amount of data that cannot be stored with conventional storage or compression technologies.

As an example, the conventional iterative geometry optimization process for turbine blades using computer aided engineering (CAE) simulations is both cost and time consuming and has limitations in terms of computational requirements and data management. A particularly problematic aspect is that the generated 3D simulation data of computational fluid dynamics (CFD) and finite element analysis (FEA) cannot be fully reused for future optimizations. The data for multiple geometry variations of the turbine blade can range from several hundred gigabytes to multiple terabytes. This leads to difficulties in storing and accessing them for a longer period.

Irrespective thereof, there is a desire to store these data, for instance in a cloud, for further use. In the prior art, due to the enormous amount of data, the data is often completely deleted after a series of simulations or optimizations has been carried out. Alternatively, only individual scalar values per simulation are stored. It is an object of the present invention to provide a method of storing data which overcomes or at least partially ameliorates some of the abovementioned disadvantages or which at least provides the public with a useful choice.

Statements Of Invention

According to a first aspect, the present disclosure may provide a method of storing 3D field data, comprising the following steps:

S1 - Obtaining 3D field data related to a first group of specimens of a parameterizable engineering component, the 3D field data comprising geometry data;

S2 - Defining a set of geometry parameters of the specimens;

S3 - Training a variational autoencoder model (VAE) to compress the 3D field data to a latent space and restore it, and then splitting the VAE into an encoder model and a decoder model, wherein learned nodal weights of the encoder model and decoder model are set permanent for the further steps of the method;

S4 - Connecting a multilayer perceptron network model (MLP) to an input layer of the decoder model of the VAE to form a Hybrid Multilayer Perceptron - Variational Autoencoder model (MLP-VAE);

S5 - Training the MLP-VAE to map the set of geometry parameters to the 3D field data; and

S6 - Storing the latent space in a storage medium.

To address the challenges mentioned above, the proposed method employs machine learning models for data reduction of 3D surface field data. Specifically, the VAE disclosed herein combines two models: an encoder and a decoder. The encoder model transforms the input data into a representation of reduced dimensionality in a latent space, and the decoder model reconstructs the input data from the given latent representation in its original space. The latent representation of the input data and the trained VAE together result in much smaller data amounts, solving the issue of data storage for future use.

The pretrained VAE can strongly compress CFD and FEA data of engineering components into a reduced vector format with over 99% compression rate while preserving the important details of the data. It is not limited to learning the pattern of a single feature.

The architecture captures two to three features in a single network model with minimal error. Therefore, it is a potent means for data storage cost reduction, for both cloud applications and local networks.

Furthermore, the fully connected feed forward MLP is trained to learn the mapping of the geometry parameters to the latent space. Thereby, the MLP is combined with the trained decoder of the VAE to form the proposed MLP-VAE hybrid neural network model.

The proposed MLP-VAE therefore also represents a means to predict the surface field data results for new and unseen geometry variations of specimens of the parameterizable engineering component, and generate their latent representations without any additional cost. This means that using the proposed method, it is possible to directly forecast thermomechanical computational fluid dynamics (CFD) field data and/or finite element analysis (FEA) field data, namely temperature, pressure, and stress, for an engineering component. This may be accomplished by utilizing geometry parameter values of variations of the engineering component and incorporating the variational inference (VI) capability of the pretrained VAE network, which is a critical aspect of VAE for generative field data prediction in new, unseen design variations of the engineering component. By employing this hybrid neural network approach, the need for costly geometry updates and simulations may be eliminated.

Moreover, it has been found that the MLP-VAE model can produce output results that are remarkably similar to those generated by the VAE. Despite the MLP-VAE's ability to directly predict CFD and FEA field data from geometry parameter values, the saved VAE compressed data from actual simulations can therefore be used to verify the robustness of the MLP-VAE in case of future deployment or retraining with additional data.

According to another aspect, the present disclosure may provide a method for generating an engineering component, comprising the following steps:

> E1 - engineering an engineering component, involving a plurality of engineering steps in an engineering system, the engineering system offering one or more design steps for the engineering component in relation to one or more of the engineering steps;

> E2 - storing data generated by the engineering system in a database connected to the engineering system, the data including engineering component data relating to the design steps; and

> E3 - generating the engineering component using the data stored in the database and using at least one manufacturing device connected to the database;

> wherein

> step E1 of engineering the engineering component comprises performing a parameter study relating to a geometry of the engineering component, and generating 3D field data and 3D geometry data relating to a group of specimens of the engineering component; and wherein

> step E2 comprises storing the 3D field data using the method of storing 3D field data described above.

As used in the present disclosure, the term "engineering component" may refer to any component, part or assembly that is subject to engineering. Engineering components are subject to designing steps that are typically directed at optimising the engineering component with a view to certain performance requirements.

As used in the present disclosure, the term "engineering step" may comprise the design and/or verification of components, parts or aspects of the engineering component.

The term "engineering system" may comprise a stand-alone software application or a bundle of software applications that may subsequently or in parallel be operated in the design process of the engineering component. As an example, the engineering system may comprise a CAD (computer aided design) software, a FEA software, and a CAM (computer aided manufacturing) system or software.

The term "database" as used herein may comprise local and cloud storage space.

For the purpose of step E3, a "manufacturing device" can be any kind of device that is used in the manufacture of the engineering component in question. For example, for turbine blades, any kind of casting, forging, additive manufacturing, welding, milling, and/or grinding equipment used to manufacture the turbine blade itself or formwork used to make the turbine blade may form a part of a manufacturing device. In particular, the above-mentioned CAM system may form part of a manufacturing device.

The method of generating an engineering component defined above allows for the storage of huge amounts of data that may be obtained in the course of the step of engineering, and thereby for the conduction of comprehensible parameter studies that help optimising particular aspects of the engineering component. Such studies may thereby become a lot more cost effective, or even possible, due to the way in which the 3D field data is being stored.

The step S1 of obtaining 3D field data may comprise obtaining 3D field data from a multitude of simulations and/or measurements of at least one physical state of the specimens.

The 3D field data may represent one or more mechanical and/or thermal states of the specimens, preferably one or more stress distributions and/or temperature distributions.

The 3D field data may comprise data obtained from computational fluid dynamics models (CFD) and/or finite element analysis (FEA).

The method may comprise the step of storing one or both of the VAE and the MLP-VAE in a storage medium. This step allows to decode the 3D field data from the latent space. If both the VAE and the MLP-VAE are stored, the latent space can be decoded using both the VAE and the MLP-VAE, which allows for verifying that the reconstruction of the data from the latent space is adequate. The storage medium may be the same or a different storage as the one used to store the latent space in step S6.

The method may comprise the following step:

S7 - Storing further 3D field data related to the parameterizable engineering component to the latent space, using the MLP-VAE.

The step S7 of storing further 3D field data may comprise storing 3D field data of specimens of the parameterizable engineering component not included in the first group of specimens. Preferably, the further 3D field data is derived from further simulations and/or measurements of specimens of the parameterizable engineering component.

The 3D field data may comprise point-cloud data.

The method may comprise the step of pre-processing the 3D field data to transfer the point-cloud data into two-dimensional image data before training the VAE at step S3.

The step S3 of training the MLP-VAE comprises generating new data samples by sampling the latent representation from a learned probability distribution over the latent space.

A reparameterization algorithm may be used to propagate gradients through the VAE.

The MLP component of the MLP-VAE may be regularized using L2 regularization.

The specimens may comprise turbine blades.

The 3D field data relating to the group of specimens of the engineering component may comprise results of the parameter study.

Generating 3D field data in step E1 may comprise generating computational fluid dynamics models (CFD) and/or finite element analysis models (FEA) of specimens of the parameterizable engineering component.

Step E3 of generating the engineering component may comprise the steps of:

E3a - selecting an individual specimen of the group of specimens of the engineering component at least partially based on results of the parameter study;

E3b - accessing 3D geometry data relating to the selected individual specimen stored in the database;

E3c - transmitting, via a data interface, the 3D geometry data to a control unit of the at least one manufacturing device; and

E3d - using the control unit, controlling the at least one manufacturing device to generate the engineering component according to the 3D geometry data.

Other aspects of the invention may become apparent from the following detailed description which is given by way of example only and with reference to the accompanying drawings.

As used herein the term "and/or" means "and" or "or", or both.

As used herein "(s)" following a noun means the plural and/or singular forms of the noun.

The term "comprising" as used in this specification and claims means "consisting at least in part of". When interpreting statements in this specification and claims which include that term, the features, prefaced by that term in each statement, all need to be present but other features can also be present. Related terms such as "comprise" and "comprised" are to be interpreted in the same manner.

The entire disclosures of all applications, patents and publications, cited above and below, if any, are hereby incorporated by reference.

This invention may also be said broadly to consist in the parts, elements and features referred to or indicated in the specification of the application, individually or collectively, and any or all combinations of any two or more of said parts, elements or features, and where specific integers are mentioned herein which have known equivalents in the art to which this invention relates, such known equivalents are deemed to be incorporated herein as if individually set forth.)

Brief Description of the Figures

The invention will now be described by way of example only and with reference to the drawings in which:

Figure 1: shows a turbine blade baseline design;

Figure 2: shows an airfoil cross-section variation of a turbine blade;

Figure 3: shows a simulation process chain for the design of turbine blades;

Figure 4: shows simulation results for temperature and pressure
points along airfoil section surfaces for a pressure side and a suction side of a turbine blade;

Figure 5: shows a point cloud of v. Mises stress points along fillet surfaces for pressure and suction sides of a turbine blade design;

Figure 6: shows a schematic representation of a network architecture of a VAE and of a hybrid MLP-VAE network;

Figure 7a: shows an example of grid sampling to reduce
points and obtain equidistancy for image processing;

Figure 7b: shows planting of fake NaN points for smooth griddata interpolation;

Figure 8: shows training loss histories of a method according to an embodiment of the invention;

Figure 9: shows a temperature field pressure field, y coordinates, ground truth, prediction, and error plot of a validation dataset;

Figure 10: shows 3d projections of temperature and pressure fields for the pressure side of a turbine blade design;

Figure 11: shows a comparison of MLP-VAE predictions of reconstructed temperature, pressure, and coordinate data with the ground truth;

Figure 12: 3d projections of the temperature and pressure fields for the pressure side of turbine blade designs from the testing set using the y coordinates;

Figure 13: shows a comparison of the prediction performance of the VAE and the MLP-VAE;

Figure 14: shows 3D projections of the stress fields for the pressure side of a turbine blade design.

Detailed Description

In the above drawings similar features are generally indicated by similar numerals.
A Latent-Space variable (or latent space) is a concept from machine learning theory and refers to an abstract, multi-dimensional representation of data generated by an algorithm. This data is usually high-dimensional and complex, such as images or text. The Latent-Space variable maps this high-dimensional data onto a lower-dimensional "latent" space that captures the most important features or structures of the original data. This abstract representation is often used to recognize patterns, determine similarities between data points, or for data compression. In Deep Learning and specifically in autoencoders and Generative Adversarial Networks (GANs), Latent-Space variables are commonly used to model complex datasets and generate new data points that resemble the original data.
The concept of Latent-Space variables plays a central role in many machine learning models, especially those dealing with unstructured, high-dimensional data such as images, text, or audio signals. Typically, the idea is to discover the underlying, hidden structures or patterns in the data that are not obvious to human observers. These "latent" or hidden features can then be used to make predictions, classify data, find similarities between data points, or generate new data. A good example of a model that uses Latent-Space variables is the autoencoder. An autoencoder consists of two parts: an encoder and a decoder. The encoder takes the high-dimensional input data and compresses it into a lower-dimensional latent space. This latent space represents the most important, abstract features of the data. The decoder then takes these latent variables and tries to reconstruct the original input data as accurately as possible. These models can be trained by aiming to minimize the difference between the original and the reconstructed data (also known as reconstruction error). After training, the encoder can be used to project new data into the latent space, and the decoder can be used to generate new data that resemble the trained data.
A Multilayer Perceptron (MLP) is an artificial neural network that consists of multiple layers of neurons interconnected. It belongs to the class of feedforward neural networks. An MLP usually consists of at least three layers: an input layer, one or more hidden layers, and an output layer. Each layer consists of neurons, each calculating a weighted sum of their inputs and then applying an activation function to produce the result. The weights and biases of the neurons are adjusted during the network's training. An example of an MLP could be a simple image classification system. The input layer takes the pixel values of the image. The hidden layers process these inputs and try to recognize important features of the image. The output layer then outputs a probability for each possible class (for example, it could be a network that classifies images of dogs and cats, and the output layer would output the probability that the image shows a cat or a dog). Although MLPs are capable of recognizing and learning complex patterns, they are fully connected and therefore can have a large number of parameters, which makes them prone to overfitting and inefficient in dealing with images or other high-dimensional data. In such cases, convolutional neural networks (CNN) or other specialized types of neural networks are often used. A CNN takes into account the spatial structure of the input data. It consists of convolutional layers, which learn small, local patterns in the data (like edges or textures in images), followed by fully connected layers (similar to those in an MLP) that combine these local patterns into global patterns, because of this structure, CNNs are particularly well suited for processing image data and other types of grid-based data, as they are able to capture the spatial hierarchies in these data.

Another difference between MLPs and CNNs is the number of parameters to learn. Since MLPs are fully connected, they tend to have more parameters to learn than CNNs, which have fewer parameters due to their convolution operations and weight sharing. This makes CNNs more efficient and less prone to overfitting when working with large, high-dimensional data like images.

The following detailed description of the proposed methods is being conducted using a particular example of an engineering component, namely turbine blades as used in e.g. gas turbines. Gas turbines have established themselves as indispensable components in various sectors, including power generation, oil and gas, and industrial applications. Their efficiency and performance are critical for maximizing energy production and minimizing environmental impact. Turbine blades, in particular, play a significant role in determining the overall performance of the gas turbine.

Optimizing turbine blade designs as an example of optimizing an engineering component is a multidisciplinary problem that requires balancing aerodynamics, heat transfer, structural analysis, and dynamics to achieve an optimal design. The design of turbine blades aims to maintain low interior temperatures within allowable material property limits and thermal stress constraints by carefully considering the external blade shape, internal coolant passages, and film cooling ports. This process involves both aerodynamic and structural constraints. To optimize turbine blade designs, computational fluid dynamics (CFD) and finite element analysis (FEA) simulations are commonly used in engineering systems. However, these simulations are computationally expensive and time-consuming, which limits their applicability. To address this challenge, surrogate models have been developed to approximate CFD/FEA simulations at reduced computational cost.

Several studies have explored the use of machine learning techniques to develop surrogate models for turbine blade design. However, all known studies rely on existing simulation data for several turbine blade designs to establish their surrogate models based on neural networks. In the multidisciplinary optimization task of a turbine blade, the generated simulation data can quickly exceed storage limitations. In the present disclosure, we therefore propose a convolutional variational autoencoder (VAE) whose encoder allows to compress spatial thermomechanical field data of turbine blades into a representation of reduced dimensionality - the so-called latent representation. The decoder of the VAE is then capable to reconstruct the field data based on the information saved by the latent representation. The multilayer perceptron - variational autoencoder (MLP-VAE) proposed in the present disclosure represents an extended model, which combines a multilayer perceptron (MLP) and the decoder of the VAE. The MLP-VAE is trained to learn the nonlinear relationship between the spatial field data and the geometry parameter values of the turbine blade design that was used to generate the field data. This hybrid network approach generates the spatial field data directly from a few parameters without the requirement of the existing blade geometry and its simulations. In contrast to prior art solutions, the inventors also employed the variational inference (VI) technique to the MLP-VAE. In contrast to the prior art, the presently proposed approach, apart from learning fields, incorporates additionally the blade shapes. The inventors evaluated this hybrid architecture on a benchmark dataset of turbine blade designs. The results show that the proposed architecture significantly reduces the computational cost while maintaining high accuracy in the predicted field data.


Target Configuration: A 3d Turbine Blade

In this section, a methodology to conduct conjugate heat transfer (CHT) computational fluid dynamics (CFD) and structural mechanics (SM) finite element analysis (FEA) simulations for a number of geometry variations of a turbine blade is described. These simulations are used to generate data for the data-driven learning process of the hybrid surrogate neural network.

To provide a comprehensive understanding of the turbine blade and simulation process, the design of the turbine blade and its parametrization are outlined. From there, the simulation process chain and the specific operating conditions under which the simulations were conducted are described. Finally, the retrieved data from the simulations that are used to train the neural networks are described.

Turbine Blade and Operating Condition

The performance and efficiency of a turbine blade are determined by several factors, including material properties, manufacturing process, blade cooling techniques, the operational environment, and blade design. Identifying the optimal blade design involves the modification of various geometric parameters of the blade, such as its shape, size, and surface features to enhance its aerodynamical and thermomechanical properties. This ensures both optimal performance and structural reliability.

In this disclosure, the computer aided design (CAD) model of a stage 3 turbine blade from a heavy-duty gas turbine is used as a basis for the proposed method. The turbine blade is evaluated for different geometry variations, also referred to as designs, within design of experiments (DoE) studies. DoE is a powerful statistical tool that can be used to identify important input factors and analyze their relationship with the outputs. For this, the CAD model of the turbine blade is parameterized, which is also referred to as a step S2 of the proposed method: the geometry is defined by a set of parameters that can be modified to multiple designs. The turbine blade design with the initial parameter values is referred to as baseline.

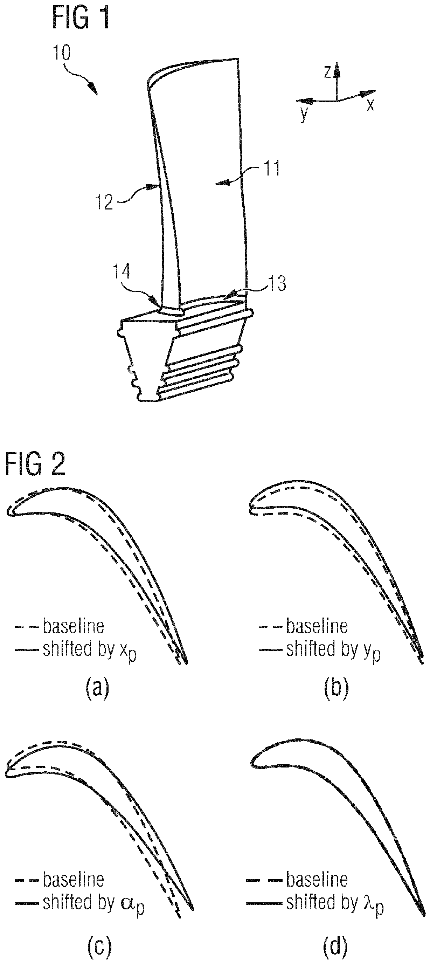

Figure 1 shows the baseline turbine blade 10 design with its pressure side 11 and suction side 12. Also shown are the fillet surfaces 13, 14 of the pressure side 11 and suction side 12, respectively. Additionally, a coordinate system is shown, where x is the axial, y the tangential and z the radial dimension of the turbine blade.

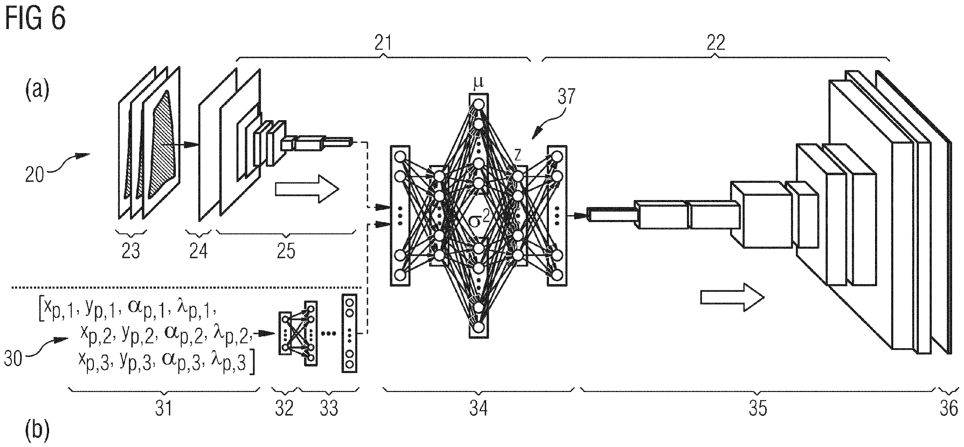

Foil cross-sections are varied across three fixed levels in the radial direction of the turbine blade 10. This results in a total of twelve geometry parameters $[x_{p,1}, y_{p,1}, a_{p,1}, l_{p,1}, x_{p,2}, y_{p,2}, a_{p,2}, l_{p,2}, x_{p,3}, y_{p,3}, a_{p,3}, l_{p,3}]$ listed at 31 in Figure 6(b), and each variation represents a new turbine blade 10 design. A specimen or technical product the variations in geometry of which can be reduced to this kind of parameter set are also referred to as "parameterizable specimens" for the purpose of the present disclosure. Figure 2 shows the influence of the four parameters for the airfoil cross-section at one of the three levels, namely $x_p$, $y_p$, $a_p$ and $\lambda_p$. The parameter $x_p$ is responsible for shifting the airfoil cross-section in axial direction, $y_p$ for shifting it in tangential direction, $a_p$ for rotating it around the so-called stacking axis and $\lambda_p$ for scaling it. The representation refers to a given level in the z-direction.

Numerical Methodology

The parametrized CAD model of the turbine blade 10 is used as the basis for conducting simulations to evaluate its aerodynamic and thermomechanical performance under various operating conditions for a range of blade designs. The operating conditions of the CHT and SM simulations in this work are based on the full speed, full load (FSFL) conditions of a heavy-duty gas turbine, which is designed to operate at its frequency-dependent grid speed of $\omega$ = 3000 rpm or 3600 rpm.

Table 1 provides an overview of the loads and boundary conditions utilized in both the CHT and SM models for simulating the turbine blade 10. The values of $p_{t,inlet}$, $T_{t,inlet}$ and $p_{s,}$outlet for the CHT model are determined by functions of the turbine blade's 10 radial coordinate z. These functions are interpolations of experimental data points obtained from real FSFL tests of the gas turbine. For the SM model, $p$blade and $T$blade are the field result inputs from an upstream conducted CHT simulation.

### TABLE 1: LOADS AND BOUNDARY CONDITIONS

| Boundary | Parameter | Label |
|---|---|---|
| CHT/CFD | | |
| inlet | total pressure | $pt,$ inlet |
| inlet | total temperature | $Tt,$ inlet |
| outlet | static pressure | $ps,$ outlet |
| blade, casing | adiabatic, no-slip wall | |
| casing | angular velocity | $\omega$ |
| SM/FEA | | |
| disk/blade | contact constraint | axial |
| disk/blade | contact constraint | radial |
| disk/blade | contact constraint | tangential |
| disk/blade | angular velocity | $\omega$ |
| blade | pressure | $p$blade $\rightarrow$ CHT |
| blade | temperature | $T$blade $\rightarrow$ CHT |

CHT is a heat transfer analysis that combines fluid dynamics and heat transfer to simulate the heat exchange between fluids and solids, in our scenario between hot air as the fluid and the turbine blade as the solid. In the CHT simulations, the Reynolds-averaged Navier-Stokes (RANS) equations are solved for the compressible flow of air - air assumed as ideal gas -, with the $k$ - $\varepsilon$ turbulence model. The coupled solver models the interaction between fluid flow and solid objects, where both the fluid flow and heat transfer are solved simultaneously with the deformation of the solid blade. These simulations are known as fluid-thermalstructural interaction (FTSI) simulations.

**TABLE 2: CONVERGED MESH PROPERTIES**

| Body | Property | Specifics |
|---|---|---|
| CHT/CFD | | |
| air (fluid) | no. of cells | $\approx 4.83 \times 10^6$ |
| air (fluid) | no. of vertices | $\approx 12.80 \times 10^6$ |
| air (fluid) | cell type | polyhedral (+prism) |
| blade (solid) | no. of cells | $\approx 1.99 \times 10^6$ |
| blade (solid) | no. of vertices | $\approx 6.26 \times 10^6$ |
| blade (solid) | cell type | polyhedral (+prism) |
| SM/FEA | | |
| blade | no. of elements $\approx$ | $\approx 0.28 \times 10^6$ |
| blade | no. of nodes | $\approx 0.41 \times 10^6$ |
| blade | element type | Tetra10 (+Tri6) |

As for the SM FEA simulations, the structural linear statics solver solves the governing equations, which describe the behavior of a structure subjected to both mechanical and thermal loads, and retrieve the static solution.

The overall converged mesh details for the baseline are given by Table 2. The CHT model uses a polyhedral volume mesh for both air and blade, whereas the interfaces between both have prism layers employed. For the SM model, Tetra10 elements are used for the volume mesh of the blade and Tri6 elements for a more structured and refined mesh along contact surfaces between the blade and disk.

Simulation Chain of Design of Experiments

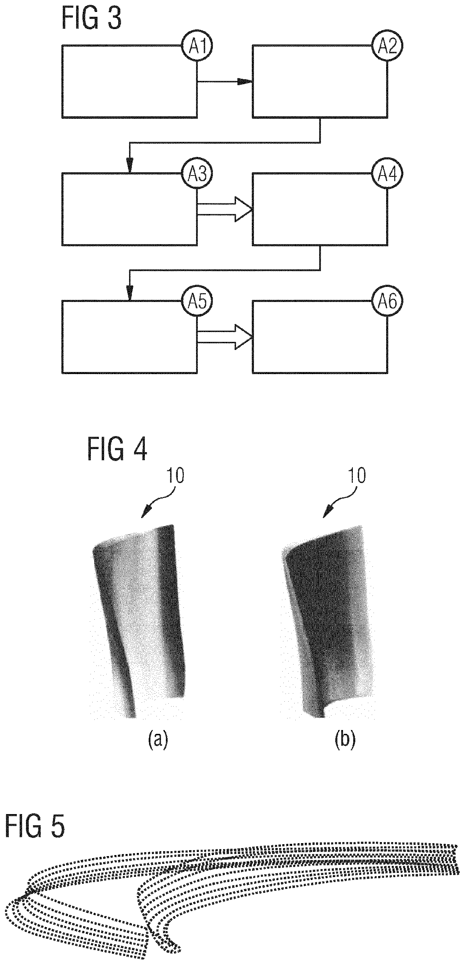

Figure 3 summarizes the setup for the DoE studies. It is an automated serialized process chain for generating a number of turbine blade designs. This is accomplished by varying the above-mentioned twelve geometry parameters disclosed at 31 in Figure 6(b) within predefined parameter spaces. The composite of all parameter spaces is referred to as design space.

Two separate DoE studies were conducted by statistically sampling the twelve parameters from the design space. The first study was performed with Latin hypercube sampling (LHS) and the second study utilized Hammersley sampling (HSS). LHS and HSS are both methods for generating sets of uniformly distributed samples across multi-dimensional domains. However, LHS prioritizes ensuring good uniformity properties along each individual dimension potentially translating to non-optimal space-filling. In contrast, HSS is designed to achieve better space-filling properties on a k-dimensional unit hypercube, leading to improved uniformity across the entire multi-dimensional space. This means that HSS is better suited for generating samples with good coverage of higher-dimensional input spaces. The combination of LHS and HSS offers a broader coverage of the design space since both create different uniformly distributed samples. This is especially important for neural network training. The simulation process chain visualized in Figure 3 consists mainly of four steps: initialization, geometry variation, CHT and SM.

During initialization at A1 of Figure 3, all the data required to run the chain is copied from an external container folder into all the design folders, which are created before the initialization begins. The data contains the CAD models of disk and turbine blade 10, the preset simulation models for CHT and SM and other required configuration and meta data. The CAD model of a turbine blade 10 is designed to meet the requirements of the operating gas turbine. Thus, it is referred to as operating or hot model. After the initialization follows the geometry variation and update of the hot CAD model at A2, based on the sampled parameter values from the design space. On a single CPU core, this procedure requires an average of 0.5 h to compute for a design. Then, at A3, the updated CAD model is imported into the CHT simulation model, where the resulting temperature and pressure fields are computed and output at A4. The CHT simulation for each individual design converges after an average of 1.5 h with 24 CPU cores.

The temperature and pressure fields are further required as inputs for the final SM simulation of the chain at A5.

Before the structural FEA model is solved for its linear static solution, the hot turbine blade shape must be transformed into its manufactured or cold shape. This so-called hot-to-cold procedure is also performed by FEA using mesh morphing and takes an average of 0.42 h with 12 CPU cores. After the cold blade mesh is ready, the structural FEA model is simulated, resulting in the structural linear static results, including the v. Mises stress field, at A6. The simulation demands an average of 0.38 h with 12 GPU cores for each design.

With this simulation process chain a total of $L = 644$ turbine blade designs were generated and evaluated, 371 LHS designs and 273 HSS designs. The following sections present the obtained CHT and SM field results.

Temperature and Pressure Data of CHT

Precise analysis of the temperature and pressure distribution is crucial to predict and prevent potential problems, such as high thermal stresses and blade flutter, which can significantly impact the blade life and overall performance of the gas turbine. At A5, the resulting temperature and pressure fields of the CHT simulations are exported separately along the airfoil section surfaces of the pressure and suction side for each design. Each CHT field data sample consists of the set of vertices in their respective surface mesh, where a single vertex is defined by the values for the coordinates *x, y, z,* the temperature value *T* and the pressure value *p*. This creates two datasets of *L* multidimensional samples for both pressure and suction side with the format:

$$\mathcal{C} = \{\boldsymbol{C}_1, \boldsymbol{C}_2, \ldots, \boldsymbol{C}_L\}_{l=1}^{L} \qquad \text{(Equation 1)}$$

where $\mathbf{C}_l = [\mathbf{x}_l, \ \mathbf{y}_l, \ \mathbf{z}_l, \ \mathbf{T}_l, \ \mathbf{p}_l] \in \mathbb{R}^{v \times 5}$. The subscript $v$ denotes the number of vertices in each design sample.

Figure 4 shows point cloud visualizations for the exported CHT temperature and pressure field results along the airfoil section surfaces of both turbine blade pressure and suction side for the baseline. The baseline consists of approximately $47 \times 10^3$ vertices for the pressure side and $55 \times 10^3$ vertices for the suction side. The number of vertices differ from design to design.

Structural Stress Data of FEA

Analyzing the stress distribution in the high-stress fillet region of a turbine blade is essential for preventing fatigue cracking and improving its reliability. Similar to the temperature and pressure fields of the CHT simulations, the v. Mises stress fields of the SM FEA simulations are exported at A6 along the fillet surfaces for the pressure and suction side of each design. Each SM field data sample consists of the set of nodes in their respective surface mesh, where a single node is defined by the values for the coordinates x, *y,* z and the v. Mises stress value $\sigma_v$. This results in the two datasets, with the same number of L multidimensional samples as the CHT dataset, for both pressure and suction side with the format:

$$\mathcal{M} = \{\boldsymbol{M}_1, \boldsymbol{M}_2, \ldots, \boldsymbol{M}_L\}_{l=1}^{L} \qquad \text{(Equation 2)}$$

where $\mathbf{M}_l = [\mathbf{x}_l, \ \mathbf{y}_l, \ \mathbf{z}_l, \ \boldsymbol{\sigma}_{v,l}] \in \mathbb{R}^{n \times 4}$. The subscript $n$ denotes the number of nodes in each design sample.

Figure 5 shows a point cloud visualization 10' for the exported v. Mises stress field results along the fillet surfaces of both turbine blade pressure and suction side for the baseline. It consists of approximately 825 nodes for the pressure side and 910 nodes for the suction side. The number of nodes also differs from design to design and is much less than the number of vertices in the CHT field data samples. This is due to the smaller surface size of the fillets and the smaller mesh density of the SM simulation model.

The Hybrid Surrogate Strategy

In this section, an overview of the integral components is given that form the foundation of the proposed network model - the hybrid surrogate neural network or hybrid convolutional variational autoencoder model (MLP-VAE). This neural network is designed to predict the spatial conjugate heat transfer (CHT) and structural mechanics (SM) result fields occurring within surface shapes of different designs based solely on the values of the above-mentioned twelve geometry parameters of each design. Importantly, this approach eliminates the need for additional costs associated with the four main steps of the simulation process chain shown in Figure 3, wherein costs is to be understood both in terms of financial and technical efforts, for example with a view to computing time and accommodating storage space.

The section commences by elucidating the fundamental components of our hybrid surrogate - the multilayer perceptron (MLP) and the variational autoencoder (VAE). Subsequently, the following section delves into the nuances of the hybrid surrogate model's architecture, a fusion of the MLP and VAE (MLP-VAE). Following this, further sections explain the data preprocessing and network training.

Multilayer Perceptron

A multilayer perceptron (MLP) is a fundamental neural network architecture that has been widely used in various fields. MLP comprises several fully connected layers of neurons, which can be trained with backpropagation to perform various tasks such as classification and regression. Despite its simplicity, MLP is a flexible and universal architecture that can approximate any continuous function to arbitrary accuracy, making it a popular choice for many applications. Given the goal of predicting CHT and SM field data based on twelve geometry parameters, it is reasonable to consider utilizing an MLP as a multi-input interface component. This approach is well-founded even in gas turbine literature, as MLP is versatile and capable of effectively modeling nonlinear relationships between input and output.

Variational Autoencoder

The underlying principle of an autoencoder (AE) is similar to linear methods such as proper orthogonal decomposition (POD) and principal component analysis (PCA) in that they decompose the input data into a representation of reduced dimensionality - the so-called latent representation in its latent space - that captures the most important features. However, unlike POD and PCA, AEs can learn nonlinear mappings between the input data and the latent representation, which can capture more complex relationships in the data. This often results in a latent representation that requires fewer dimensions to achieve the same compression accuracy compared to linear methods. Autoencoders use an encoder to gradually compress input data into a lower dimensional latent representation, and a decoder to reconstruct the input from this representation. The bottleneck layer, indicated at 37 in Figure 6, holds the latent representation and is smaller than the input layer, forcing the AE to learn a more efficient and condensed representation of the data.

Variational autoencoders (VAEs) are a type of autoencoder that use a probabilistic approach for data compression. They learn a probability distribution over the latent space, which allows them to generate new data samples by sampling the latent representation from the learned distribution and perform tasks such as data interpolation and manipulation. This makes VAEs particularly useful for generative tasks such as image generation. VAEs use variational inference (VI) techniques to optimize the model parameters, allowing for efficient data compression while preserving important features of the input. The sampling operation in VAEs makes it challenging to directly propagate gradients through the network during training. To overcome this issue, the reparameterization trick (RPT) is used to make the sampling operation differentiable and enable efficient optimization by allowing gradients to be propagated through the network. VAEs use a loss function that includes a Kullback-Leibler (KL) divergence term to encourage the learned distribution over the latent space (i.e., the posterior distribution) to match a known probability distribution (i.e., the prior distribution), such as a Gaussian distribution. If the variational posterior and prior are Gaussian, this results in a closed-form solution for the KL divergence term in the loss function, simplifying the optimization process. Typically, the latent representation is not one dimensional and can be denoted as the latent vector z and the learned multivariate Gaussian posterior is then given by a mean vector $\mu$ and a variance vector $\sigma^2$. The architecture of the proposed VAE is visualized in Figure 6(a).

In convolutional VAEs, the input is typically treated as a spatially ordered matrix and processed using convolutional filters to capture relative spatial patterns. Unlike MLPs, the convolutional filters are not fully connected, which reduces the number of parameters required for the network model, making it efficient and scalable for large datasets. A network compromised of convolutional filters is a convolutional neural network (CNN).

The hybrid neural network proposed herein is a combination of the previously described neural network architectures to predict the thermomechanical temperature, pressure, and stress fields within the boundaries of their respective blade surface shapes from the twelve geometry parameter values $[x_{p,1}, y_{p,1}, a_{p,1}, l_{p,1}, x_{p,2}, y_{p,2}, a_{p,2}, l_{p,2}, x_{p,3}, y_{p,3}, a_{p,3}, l_{p,3}]$ for each design of a turbine blade 10, and is generally indicated by arrow 30 in Figure 6(b). The step of obtaining 3D field data related to a certain type of parameterizable specimens, including geometry data and results of calculations, simulations and so forth as outset above is referred to as step S1 of the method disclosed herein. The step of defining the geometry parameters of the specimens is referred to as step S2.

In the present network, MLP 33 is responsible for mapping the geometry parameter values into a low-dimensional latent space, while the decoder 22 of the VAE 20 is used to generate the blade surface shapes, including the thermomechanical fields. Both, the surface shapes and fields can be described by a few parameters, denoted by the previously mentioned latent vector z. To perform this mapping, the MLP 33 is required to understand both the geometry variation and the latent space structure.

At step S3, the hybrid MLP-VAE 30 involves training a VAE 20 to compress and restore turbine blade 10 surface shapes including their thermomechanical field data, and then splitting it into an encoder and decoder. The encoder 21 and decoder 22 weights are set permanent or "frozen", meaning they do not change for upcoming training stages. In step S4, the encoder 21 of the VAE 20 is replaced by an MLP 33 which is connected to the input of the frozen VAE decoder 22. At step S5, the combined hybrid MLP-VAE network model 30 is then trained to learn the mapping from the twelve geometry parameters 31 to blade surface shape representation and their thermomechanical fields. Since the VAE has the ability to learn a probability distribution, the same variational inference (VI) mechanism are incorporated into the MLP 33 to maintain its generative potential for new designs. The general architecture of the proposed MLP-VAE is visualized in Figure 6(b).

A step S6 comprises storing the trained MLP-VAE and the latent space, for example to a cloud storage or to a local computer storage. The latent space and MLP-VAE require much less storage space than the original 3D field data compressed therein. As a further advantage, each additional simulation only reduces the required storage space. This means that if the amount of data doubles, the model does not double in size, but the increase decreases with further variations.

Since the MLP-VAE has been trained in step S5, the latent space or, in other words, the latent vector, of the MLP-VAE in step S6 might be slightly different to the latent space of the VAE in step S3. If the size of the latent vector is the same for both VAE and MLP-VAE, then the latent space would have the same dimensionality for both models. This means that the latent vectors themselves would have the same number of elements. While the encoding and decoding functions would be different due to the difference in the number of parameters, the latent space representations should be similar in terms of the distribution of points and their relationships to each other.

In the proposed approach, the decoder weights of the MLP-VAE 30 are kept frozen to allow for validation of the predicted thermomechanical surface fields. Moreover, updating the decoder 22 would render the encoder 21 useless as it would no longer work with the updated decoder 22. This frozen state also enables the reduction in size of future generated results via their latent representation in a step S7.

Data Preprocessing

Prior to training the proposed neural network, the data may be pre-processed, since the components of the CNN 35 of the convolutional VAE 20 (see Figure 6(a)) processes inputs in the form of images. The exported data output at the output layer 36, however, comprises 3D point cloud results for pressure, temperature, and stress for each design as well as corresponding labels consisting of the set of vectors with the twelve geometry parameter values. The label set is therefore represented as a collection of L vector samples with the format:

$$\mathcal{G} = \{\boldsymbol{g}_1, \boldsymbol{g}_2, ..., \boldsymbol{g}_L\}_{l=1}^{L} \qquad \text{(Equation 3)}$$

where $\boldsymbol{g}_l \in \mathbb{R}^{1 \times 12}$ with the twelve parameters shown in the input vector at 31 of Figure 6(b).

To transform the surface point cloud samples of each data set into images 39 (see Figure 6), a multivariate griddata interpolation may be utilised, which may be specifically designed to map and interpolate scattered data like point clouds onto regular grids. The griddata interpolation may comprise multiple interpolation methods, where a linear one was applied to preserve the shape and field distributions of the blade data.

Before interpolating the 3D surface point cloud samples C*l* and M*l* onto a two-dimensional grid, the point clouds are downsampled, since the points are not scattered equidistantly. Due to the points not being equidistant, some regions of the point clouds are densely populated. Consequently, the computing time to interpolate them onto 2D grids increases substantially. This is especially the case, when the point clouds are very large. By reducing the point cloud density, griddata interpolation can be computed more efficiently while still maintaining field data accuracy.

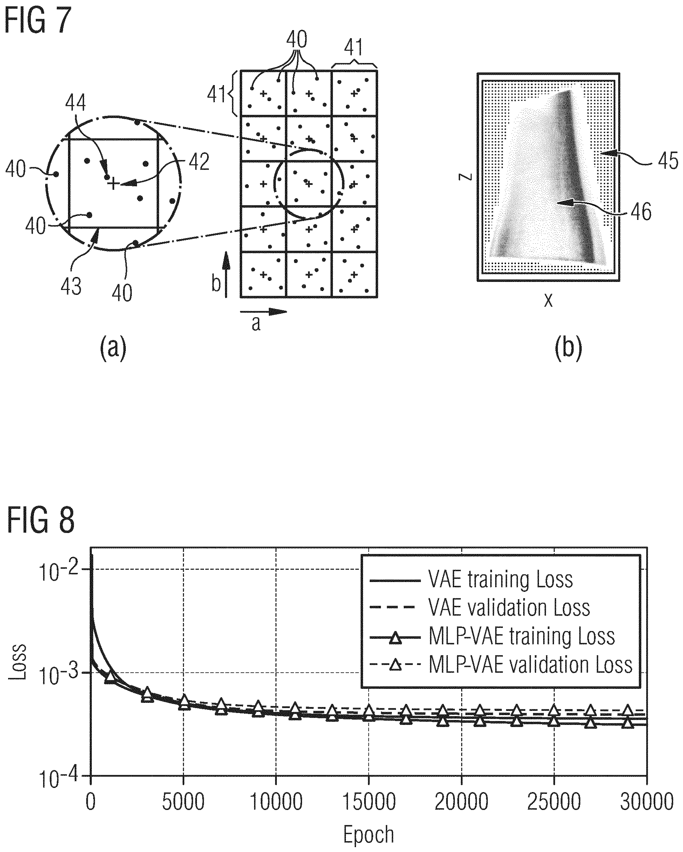

The employed 2D grid sampling strategy is visualized in Figure 7(a). It is a method for subsampling point clouds 40 in two dimensions x, z by creating a regular grid of grid cells 43 of the grid size 41 and selecting the point closest to each cell centre 42. The grid size 41 defines the grid cell dimensions and the inputs are the point cloud samples 40 after projecting them onto the 2D grid, whilst omitting the *y* coordinates. Hence, the method calculates the distance between each point 40 in a cell 43, defined by its *x* and *z* coordinates, and the cell centre 42. The output are the subsampled points 44 of each grid cell 43. The subsampled point clouds have still the same format as described by Eq. 1 and 2, but feature a reduced number of vertices *v* or nodes *n*.

The griddata interpolation of SciPy introduces another issue that needs to be dealt with. When mapping the points onto the grid, linear griddata interpolation can oversimplify the data, leading to a convex hull representation. This is because complex shapes often have sharp edges and intricate curvatures that cannot be adequately represented by straight lines. The convex hull of a set of points is the smallest convex shape that encloses all of the points within it. To address this issue, a KDTree data structure may be employed and fake points 45 with not a number (NaN) values may be planted into the grid 43 on top of the blade points or original date points 46, before applying the griddata function.

The KDTree effectively identifies the nearest neighbors among the original points and the grid points, allowing to select and place fake points 45 within the grid 43 that are sufficiently far away from the original data points 46, see also Figure 7(b). The planting of fake points 45 with NaN values serves as a regularization technique that helps the griddata algorithm produce more accurate and detailed representations of the underlying shape, while avoiding the formation of a convex hull.

Afterward, all of the NaN values are set to 0. This is due to neural networks not being capable of processing NaN values. Furthermore, all the data is normalised, which is common practice for enhancing neural network training. The geometry parameter values are normalized via standardization, which transforms the data to have a normal distribution with a mean of 0 and a standard deviation of 1 for each parameter. Whereas the field data is normalized via min max scaling to not distort the ranges between the values. This is specifically chosen so the neural networks learn to distinguish between actual data of the surface and the grid points that are not part of the data and have been set to zero. The normalized temperature, pressure, stress and $y$ values are given by $T_n$, $p_n$, $\sigma_{v,n}$ and $y_n$.

Network Training

The VAE 20 and MLP-VAE 30 may be implemented in a Software for Large-Scale Machine Learning on Heterogeneous Systems, like e.g. TensorFlow. Both VAE 20 and MLP-VAE 30 may then be trained with the adaptive moment (Adam) optimization algorithm upon the CHT data that has been mapped onto a suitable mesh grid, e.g. of shape $300 \times 200$ and normalized by preprocessing the data. The above grid shape is considered a good compromise between capturing the field data with sufficient detail and minimizing the training time for the neural network. Hence, the data for training is given by L=644 samples as

$$\mathcal{C}_n = \left\{ C_{n,1}, C_{n,2}, \ldots, C_{n,L} \right\}_{l=1}^L \qquad \text{(Equation 4)}$$

where each $C_{n,l} = \left[ \mathbf{x}_{n,l}, \; \mathbf{z}_{n,l}, \; \mathbf{T}_{n,l}, \; \mathbf{p}_{n,l}, \; \mathbf{y}_{n,l} \right] \in \mathbb{R}^{300 \times 200 \times 3}$. $\mathbf{x}_{n,l}$ and $\mathbf{z}_{n,l}$ may be mapped onto a 2D mesh grid of shape $300 \times 200$, and $\mathbf{T}_{n,l}$, $\mathbf{p}_{n,l}$, and $\mathbf{y}_{n,l}$ are the additional features associated with each grid point. All three feature fields may be trained in a single neural network model. The normalized label set is given by $\mathcal{G}_n$. $\mathcal{C}_n$ and $\mathcal{G}_n$ may be split into training and validation set of 85% and 15%, and they were shuffled with a random state for better reproducibility for the later evaluation. The training set is used to train the neural networks, while the validation set is used to evaluate the networks' performance during training and to prevent overfitting.

During training of the two neural networks, the training data may be divided into mini-batches, each containing 32 training samples. For both networks, the reconstructed images were evaluated against the ground truth images after passing through the decoder. The loss function for each mini-batch Xn can be computed as follows:

$$\mathcal{L}(\boldsymbol{\theta}, \boldsymbol{\phi}, \mathbf{x}^{(i)}) = \underbrace{\frac{K}{B} \sum_{i=1}^{B} \left\| \mathbf{x}^{(i)} - \hat{\mathbf{x}}^{(i)} \right\|^2}_{\text{reconstruction loss}}$$

$$\underbrace{- \frac{1}{2B} \sum_{i=1}^{B} \sum_{j=1}^{J} \left( 1 + \log\left( \left(\sigma_j^{(i)}\right)^2 \right) - \left(\mu_j^{(i)}\right)^2 - \left(\sigma_j^{(i)}\right)^2 \right)}_{\text{KL loss}},$$

(Equation 5)

where $\theta$ are the neural network model parameters of the decoder, $\phi$ the variational parameters of the encoder, $B$ is the total number of data points in each mini-batch, k is the upscaling factor of the reconstruction loss and x(i) is the i-th data point within the mini-batch. The first term is the reconstruction loss, where $\|x^{(i)} - \hat{x}^{(i)}\|^2$ is the squared Euclidean distance between the i-th data point of the original data $x^{(i)}$ in the mini-batch and the reconstructed data $\hat{x}^{(i)}$. The second term is the Kullback-Leibler (KL) loss, where J is the number of latent variables within the latent vector z, $\mu_J^{(i)}$ and $\sigma_J^{(i)}$ are the mean and the standard deviation of the j-th latent variable for the i-th data point in the mini-batch.

The reconstruction loss term may be upscaled to give it more weight than the KL loss term, when the focus is more on generating accurate output images. This also leads to faster and better convergence during training. The upscaling factor was determined iteratively between a value of 1 and number of pixels in each image sample. Furthermore, peak signal-to-noise ratio (PSNR), structural similarity index measure (SSIM) and root mean square error (RMSE) may be monitored as additional metrics during training. PSNR calculates the ratio between the maximum possible power of the original image and the power of the noise that affects the reconstructed or compressed version of the image. A higher PSNR indicates a higher quality image with lower distortion or noise. SSIM measures the similarity between two images based on their structural information. SSIM values range from -1 to 1, with a value of 1 indicating that the two images are identical. And RSME is the square root of the mean square error (MSE) given by the same term as the reconstruction loss in equation 5 with k=1. The unscaled loss histories for the training upon the CHT pressure side field data are exemplary presented in Figure 8.

Network Optimization

The hyperparameters of the VAE network 20 may be tuned manually due to the time-consuming nature of training the model over many epochs and the fact that model performance is often only observed late during training. Many variations in the number of convolutional layers, the number of filters and kernel size for each convolution layer, the activation function and the overall balance of layers regarding symmetry and non-symmetry may be used, where the non-symmetrical architecture can be shown to have the best performance. However, the non-symmetrical nature may present an additional challenge, which prevents the implementation of an automated tuning algorithm. For the MLP, the hyperband tuning algorithm may be used to optimize the hyperparameters including the number of layers and nodes in each layer. The hyperband optimization algorithm assumes that few training iterations can reveal promising network configurations. By evaluating a range of hyperparameters with a limited number of epochs, the algorithm efficiently identifies the best-performing hyperparameter configurations. Overall better generalization and performance may be achieved with less layers. Table 3 provides details on the optimized network components.

### TABLE 3: OPTIMIZED NETWORK COMPONENTS

| Layer Type | Layer Notes | Output Shape |
|---|---|---|
| Activation | GELU for all | |
| Encoder | | |
| InputLayer | - | (300, 200, 3) |
| Conv2D | - | (296, 196, 16) |
| MaxPooling2D | - | (148, 98, 16) |
| Conv2D | - | (144, 94, 32) |
| MaxPooling2D | - | (72, 47, 32) |
| Conv2D | - | (70, 44, 32) |
| MaxPooling2D | - | (35, 22, 32) |
| Conv2D | - | (32, 20, 64) |
| MaxPooling2D | - | (16, 10, 64) |
| Flatten | - | (10240) |
| Dense | no GELU | (200) |
| Dense $\mu$ | no GELU | (200) |
| Dense log $\sigma^2$ | no GELU | (200) |
| Lambda z | - | (200) |
| Decoder | | |
| InputLayer | - | (200) |
| Dense | no GELU | (10240) |
| Reshape | - | (16, 10, 64) |

(continued)

| Decoder | | |
|---|---|---|
| UpSampling2D | nearest | (32, 20, 64) |
| Conv2DT | - | (35, 22, 64) |
| UpSampling2D | nearest | (70, 44, 64) |
| Conv2DT | - | (72, 47, 32) |
| UpSampling2D | nearest | (144, 94, 32) |
| Conv2DT | - | (148, 98, 32) |
| UpSampling2D | nearest | (296, 196, 32) |
| Conv2DT | - | (300, 200, 16) |
| Conv2DT | - | (300, 200, 3) |

| MLP with RPT | | |
|---|---|---|
| InputLayer | - | (12) |
| Dense | $L_2$ | (512) |
| Dense | $L_2$ | (1024) |
| Dense | $L_2$ | (2048) |
| Dense | $L_2$ | (4096) |
| Dense | no GELU | (200) |
| Dense $\mu$ | no GELU | (200) |
| Dense log $\sigma^2$ | no GELU | (200) |
| Lambda z | - | (200) |

All three network architecture components may include gaussian error linear unit (GELU) activation functions, which have been found to enhance the training capabilities of the network compared to rectified linear unit (ReLU) activation functions. The MLP component of the model may be regularized using L2 regularization to prevent overfitting and encourage smoothness. By penalizing large weights, L2 regularization forces the model to learn simpler and more generalizable patterns in the data. No regularization may be used for any of the VAE parts, as there is no indication of it being beneficial and would rather lead to even slower convergence. Nearest interpolation may be used for the upsampling layers to preserve the sharpness of edges and peak values within an image, while it might produce blocky results. Bilinear interpolation on the other hand, may smooth and flatten values, potentially resulting in the not desired loss of finer details. Other interpolation methods that might produce better results, highly increase computational time due to their complexity. The latent vector shape of 200 may be selected for the network components due to the observation that smaller vector sizes led to increased reconstruction loss, while larger sizes resulted in slower convergence and increased risk of overfitting during training.

**TABLE 4: EVALUATION OF THE VAE WITH DIFFERENT LATENT VECTOR SHAPES BASED ON THE VALIDATION DATASET**

| Metric | z = 12 | z = 100 | z = 200 | z = 500 |
|---|---|---|---|---|
| PSNR in db | 31.29 | 34.91 | 35.29 | 35.41 |
| SSIM | 0.9852 | 0.9926 | 0.9933 | 0.9926 |
| RMSE | 0.0275 | 0.0181 | 0.0172 | 0.0171 |

| Metric | z = 1000 | z = 2000 | | z = 3000 |
|---|---|---|---|---|
| PSNR in db | 35.32 | 35.22 | | 34.84 |
| SSIM | 0.9921 | 0.9912 | | 98.88 |
| RMSE | 0.0172 | 0.0174 | | 0.0182 |

Table 4 lists the averaged evaluation results of the VAE for different latent vector shapes over the validation set. The validation set is not revealed when training a neural network and merely used as a network performance indicator. The vector shapes of 200 and 500 showed the best performance. While a shape of 500 returned slightly better accuracy and less noise, a shape of 200 showed a bit better structural similarity. Since the main goal is data compression, a vector shape of 200 was chosen.

Performance Of The Hybrid Surrogate Strategy

In the following, the capability of the MLPVAE neural network in predicting field data results for turbine blade pressure side surfaces will be demonstrated, providing a proof of concept for this approach. Additionally, the performance of the MLP-VAE model will be compared to that of the VAE model.

First, the performance of the VAE and MLP-VAE models are validated against CHT field data samples that were not used during training. The validation process includes testing the VAE's ability to compress CHT field images into a latent vector with few latent variables and then reconstructing them based on the compressed information. This is then compared to the field images predicted by the MLP-VAE, which are generated from the geometry parameter values. Subsequently, the CHT field image prediction capability of the MLP-VAE on samples of a new set of data is tested. Finally, the MLP-VAE architecture is probed on the SM field images based on the v. Mises stress field data discussed in the foregoing. Note that all figures in this section concern neural network predictions $\hat{T}_n(x,z), \hat{p}_n(x,z), \hat{\sigma}_{v,n}(x,z),$ and $\hat{y}_n(x,z)$, which represent normalized values. The same applies to the ground truth values. For better visibility, all the error plots are multiplied by a factor of 10.

Validation against unseen CHT Field Data

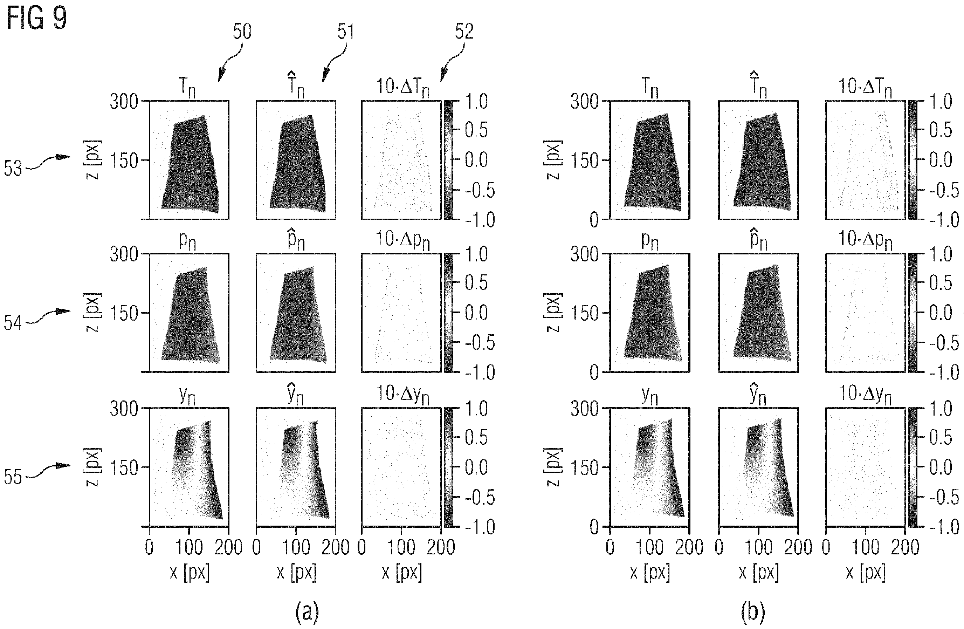

A starting point may be to compress the field data of the CHT validation set to the latent vector $z$ and to reconstruct the field data from the latent vector with the employment of the VAE. From three CHT field images of shape 300x200 to a latent vector with 200 variables, a 99,98% compression rate may be achieved. Figure 9(a) shows the field data and geometry shapes for three selected data samples from the CHT validation set along its three rows. The purpose of displaying three different samples is to illustrate that the airfoil section surface shapes may be accurately captured by the VAE. The left column 50 shows the ground truth, the middle column 51 shows the predictions, and the right column 52 shows the error plot for each of the three fields: temperature in the first row 53, pressure in the second row 54, and $y$ coordinate field distribution in the third row 55. Overall, all three distributions are well captured and visible high discrepancies only occur along the edges of the surface shape. One explanation could be the introduction of data points with 0 values that were not originally part of the actual field data, causing an abrupt change in the field information. Another potential factor is the complexity of the shapes themselves. Turbine blade deformations and the resulting shapes can be difficult to learn.

Similar results have been captured by the MLP-VAE. Figure 9(b) presents the same three samples shown in Figure 9(a) but predicted with the MLP-VAE for the twelve geometry parameter values 31 for each design sample as inputs. The error plots of the $y$ coordinates display that the deformation along the corners of the surface shape, especially on the upper corner of the turbine blade trailing edge (right edge), has a marginally higher divergence than other parts of the overall distribution. This is depicted from both the prediction of the VAE and MLP-VAE. While the pressure field predictions are very accurate, the preservation of finer temperature details shows larger differences, resulting in slightly smoothed and flattened temperature fields. For the pressure fields, there are no harsh edges within the distribution, which is likely the reason why the divergence is very low for the pressure side. Apart from edges, for both VAE and MLP-VAE, the difference between ground truths and predictions is less than 4 %. With the evaluated averaged values for PSNR: 35.21 db, SSIM: 0.9929 and RMSE: 0.0175 of the MLP-VAE over the validation set, the encoding capability is very close to the VAE (see Tab. 4).

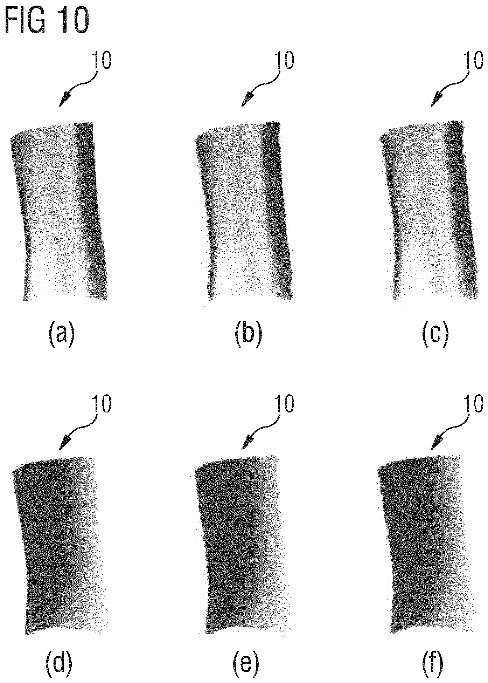

The similarity in the results is also reflected by the converged validation loss values for both networks shown in Figure 8. The converged loss value for the VAE was $3.9 \times 10^{-4}$ and for the MLP-VAE $4.2 \times 10^{-4}$. Furthermore, the satisfactory reconstruction and prediction quality of the VAE and MLP-VAE can also be seen in Figure 10. Figure 10(a) shows the true temperature field for the pressure side of a turbine blade 10 design using the y coordinates, Figure 10(b) shows the temperature field predicted by VAE, and Figure 10(c) shows the temperature field predicted by MLP-VAE. Figure 10(d) shows the true pressure field for the pressure side of a turbine blade design using the y coordinates, Figure 10(b) shows the temperature field predicted by VAE, and Figure 10(c) shows the temperature field predicted by MLP-VAE. The jittery shape of the VAE and MLP-VAE results is due to the 3D projection of the 2D field images utilizing the predicted y coordinate fields. The 3D projections can make the usage more appealing for postprocess purposes as they make the results better comparable to the original 3D CHT simulation data.

Design Exploitation

The inventors used a new dataset for testing the trained MLP-VAE neural networks. The testing dataset was generated in a completely separate design of experiments (DoE) study with optimized Latin hypercube sampling (OLHS), which is an enhanced version of the conventional Latin hypercube sampling (LHS) with improved space-filling properties. In addition, the design space of $x_p, y_p, \alpha_p$ was expanded by around 30 % and $\lambda_p$ by 3 % in both directions - positive and negative. The testing set consists of 192 design samples.

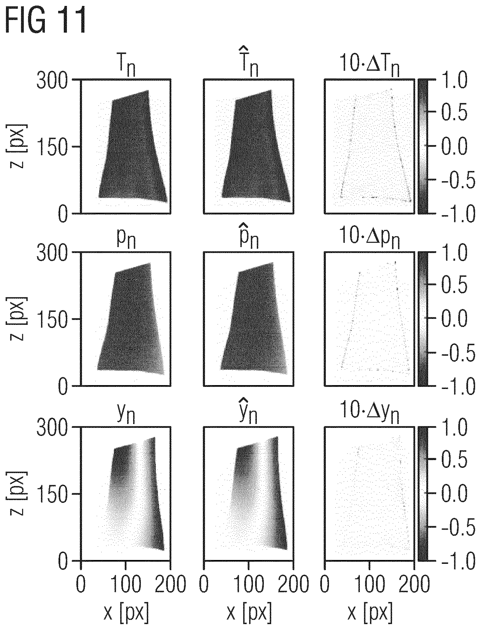

Figure 11 shows the MLP-VAE results for three design samples of the testing dataset. The result quality on the three data samples of the testing dataset is similar but slightly less accurate than what was depicted on the validation dataset. The surface shapes are well captured, while some errors can be seen around the edges of the blade and very small errors for the distributions. The $y$ coordinate field shows slight errors around the corners.

**TABLE 5: COMPARISON OF VAE, MLP-AE AND MLP-VAE ON TESTING SET**

| Metric | VAE | MLP-AE | MLP-VAE |
|---|---|---|---|
| | | **z = 200** | |
| PSNR in db | 32.36 | 32.21 | 32.43 |
| SSIM | 0.9862 | 0.9868 | 0.9889 |
| RMSE | 0.0269 | 0.0258 | 0.0249 |

Table 5 shows the average values of the performance metrics for the- VAE and MLP-VAE computed over the testing set. Due to the strong expansion of the design space, there was a noticeable accuracy decrease and error increase compared to the values evaluated on the validation dataset. However, the overall average error of below 2.7 % for the VAE and 2.5 % for the MLP-VAE (as indicated by the RMSE value) is still considered good, and the other averaged metrics returned acceptable results. The encoding of the trained VAE is less accurate with reproducing the geometry shapes of the testing design samples in comparison to the trained MLP-VAE. The opposite was the case for the validation dataset. This could be an indication of more overfitting and less generalization capability of the trained VAE. Furthermore, a comparison of the MLP-VAE and its framework without variational inference (VI), namely the MLP-AE, was performed on the testing set.

Although the performance difference was very minor, the MLP-VAE achieved better results.

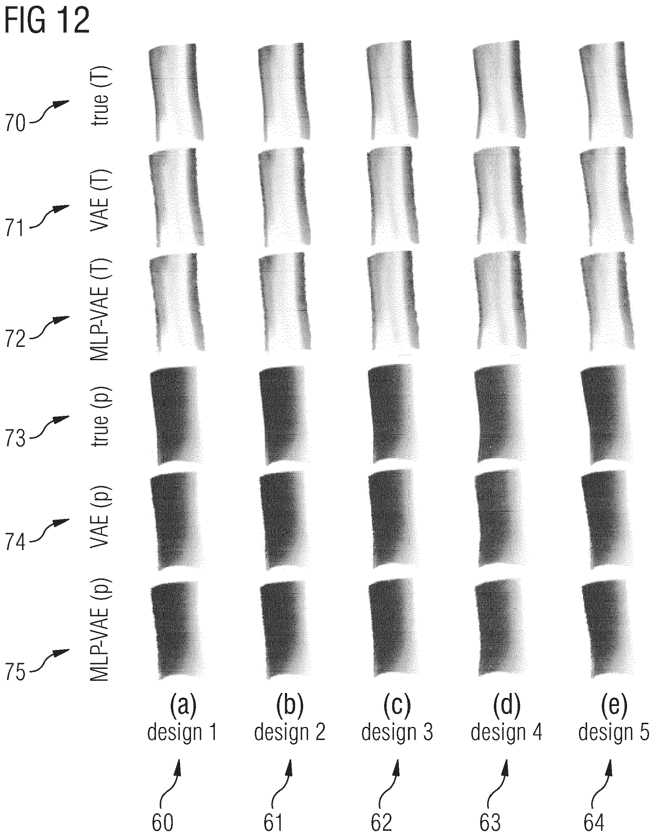

The results of VAE and MLP-VAE for five different design variations of the testing set are presented in Figure 12. The columns indicated as 60 to 61 of Figure 12 contain the individual design samples. Row 70 contains the ground truth for the temperature field across the surface of the pressure side 11 of turbine blade 10, row 70 contains the temperature field predictions of the VAE, and row 71 the temperature field predictions of the MLP-VAE. Row 73 contains the ground truth for the pressure field across the surface of the pressure side 11 of the turbine blade 10, row 74 contains the pressure field predictions of the VAE, and row 75 the pressure field predictions of the MLP-VAE. As can be taken from Figure 12, in all cases, the geometric shapes of the blade designs and their distributions were well-met.

Structural Mechanics Field Data of FEA

The SM field data samples have been mapped to a grid of shape $140 \times 360$ to make the fillet surface shapes and the distributions more prominent within the grid. Afterward, the data samples were normalized. The resulting dataset is similar to Eq. 4. It includes the stress values instead of the pressure and temperature. To train the two networks, four modifications were made within the network architectures outlined in Table 3. This included the change of the output shapes for the Input-Layer of the encoder, the first Dense layer, the Reshape layer and the last Conv2DT layer of the decoder. They needed to be adjusted to meet the requirement of two features and the grid shape of $140 \times 360$. From the two SM field images to a latent vector with 200 variables, a 99.80 % compression rate may be achieved.

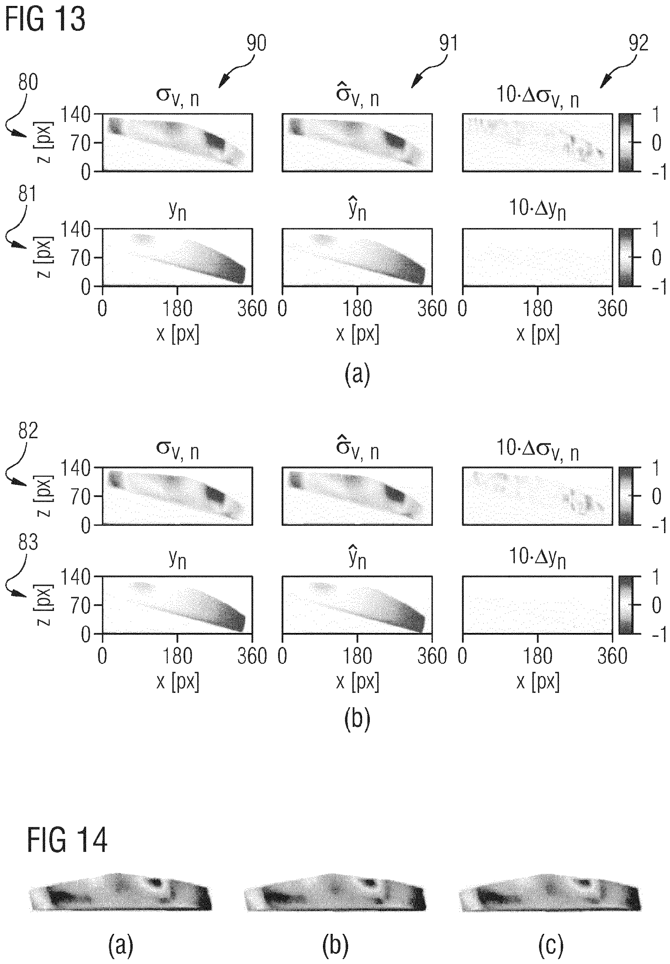

Figure 13 shows the results of two design samples from the testing dataset. Figure 13a refers to the VAE. Row 80 reflects the v.-Mises-stress field across the surface of the pressure side 11 of turbine blade 10, wherein the respective plot $\square_{v,n}$ in column 90 contains the ground truth, $\hat{\sigma}_{v,n}$ in column 91 reflects the prediction by the VAE, and the plot in column 92 indicates a deviation $Ds_{v,n}$ between the ground truth and the VAE's prediction, scaled by the factor of 10.

Similarly, Figure 13b refers to the MLP-VAE. Row 82 reflects the v.-Mises-stress field across the surface of the pressure side 11 of turbine blade 10, wherein the respective plot $s_{v,n}$ in column 90 contains the ground truth, $\hat{\sigma}_{v,n}$ in column 91 reflects the prediction by the VAE, and the plot in column 92 indicates a deviation $Ds_{v,n}$ between the ground truth and the VAE's prediction, scaled by the factor of 10.

As the fillet surface shapes are not exposed to high deformations and the shapes are less complex, they are almost accurately captured by both neural networks with smaller errors around the edges compared to the airfoil section surfaces. Furthermore, the $y$ coordinate fields show very low to no discrepancy. The stress field results depicted higher errors. Finer details within the peak areas are smoothed and flattened, visible at the red peak areas of Figure 14, which depicts 3D projections of the stress fields for the pressure side 11 of a design for a turbine blade 10, using the y-coordinates. Therein, Figure 14a shows the ground truth, Figure 14b shows the predictions of the VAE, and Figure 14c shows the predictions of the MLP-VAE. Despite the deviations, the patterns within the distributions are captured well and both networks are useful for data compression and field predictions. The overall errors for the stress distributions were less than 8%.

In the present disclosure a hybrid MLP-VAE is proposed as a means to directly forecast the surface shapes of turbine blade variations including their thermomechanical CFD and FEA field data (temperature, pressure, and stress), as well as their corresponding latent representations, using only a few parameter values. This may be accomplished by utilizing the geometry parameter values of the blade design variations and incorporating the variational inference capability of the pretrained VAE into the MLP-VAE, which is a novel aspect for generative field data prediction in new, unseen blade design variations. By employing this hybrid neural network approach, the need for costly geometry updates and simulations may be eliminated. The pretrained VAE can strongly compress CFD and FEA data of turbine blades into a reduced vector format with over 99 % compression rate while preserving the important details of the data. It is not limited to learning the pattern of a single feature. As described above, the architecture captures two to three features in a single network model with minimal error. Therefore, it can become an important driver for data storage cost reduction for future cloud applications. The inventors found that the MLP-VAE model can produce output results that are remarkably similar to those generated by the VAE. Despite the MLP-VAE's ability to directly predict CFD and FEA field data from geometry parameter values, the saved VAE-compressed data from actual simulations is valuable. With them, the robustness and encoding capability of the MLP-VAE can be verified in case of future deployment or retraining with additional data.

Where in the foregoing description reference has been made to elements or integers having known equivalents, then such equivalents are included as if they were individually set forth.

Although the invention has been described by way of example and with reference to particular embodiments, it is to be understood that modifications and/or improvements may be made without departing from the scope or spirit of the invention.

NOMENCLATURE

Turbine blade variables

| | |
|---|---|
| $p$, p | pressure(s) [Pa] |
| $T$, T | temperature(s) [K] |
| $x$, x | axial coordinate(s) [m] |
| $y$, y | tangential coordinate(s) [m] |
| $z$, z | radial coordinate(s) [m] |
| $\alpha$ | angle of rotation [°] |
| A | scale factor |
| $\sigma_v$, $\boldsymbol{\sigma_v}$ | v. Mises stress (es) [Pa] |
| $\omega$ | angular velocity [rpm] |

Neural network variables

| | |
|---|---|
| $B$ | batch size |
| C, g, M | CHT, label, SM data sample |
| C, G, M | CHT, label, SM dataset |
| x | data point |
| z | latent vector/variables |
| $\theta$, $\phi$ | generative, variational model parameters |
| $\mu$, μ | mean variable(s) |
| $\sigma$, σ | standard deviation variable(s) |

Additional superscripts and subscripts

predicted value

| | |
|---|---|
| $i, j, l$ | iteration variables |
| $n$ | normalized value |
| $p$ | parametrized value |
| $s$ | static value |
| $t$ | total value |

**EP 4 582 992 A1**

List of Reference

| | |
|---|---|
| 10 | Turbine blade |
| 11 | Pressure side |
| 12 | Suction side |
| 13 | Pressure fillet surface |
| 14 | Suction fillet surface |
| 20 | VAE |
| 21 | encoder |
| 22 | decoder |
| 23 | Normalised field images |
| 24 | Input layer |
| 25 | CNN |
| 30 | MLP-VAE |
| 31 | Parameter values |
| 32 | Input layer |
| 33 | MLP |
| 34 | MLP bottleneck with RPT |
| 35 | CNN |
| 36 | Output layer |
| 40 | Point cloud |
| 41 | Grid size |
| 42 | Cell center |
| 43 | Grid cell |
| 44 | Subsampled point |
| 45 | fake points |
| 46 | Blade points / original data points |
| 50 | Left column |
| 51 | Middle column |
| 52 | Right column |

**Claims**

1. A method of storing 3D field data, comprising the following steps:

   S1 - Obtaining 3D field data related to a first group of specimens of a parameterizable engineering component, the 3D field data comprising geometry data;
   S2 - Defining a set of geometry parameters of the specimens;
   S3 - Training a variational autoencoder model (VAE) to compress the 3D field data to a latent space and restore it, and then splitting the VAE into an encoder model and a decoder model, wherein learned nodal weights of the encoder model and decoder model are set permanent for the further steps of the method;
   S4 - Connecting a multilayer perceptron network model (MLP) to an input layer of the decoder model of the VAE to form a Hybrid Multilayer Perceptron - Variational Autoencoder model (MLP-VAE);
   S5 - Training the MLP-VAE to map the set of geometry parameters to the 3D field data; and
   S6 - Storing the latent space in a storage medium.

2. The method of claim 1, comprising the step of storing one or both of the VAE and the MLP-VAE in a storage medium.

3. The method of any one of claims 1 and 2, wherein the step S1 of obtaining 3D field data comprises obtaining 3D field data from a multitude of simulations and/or measurements of at least one physical state of the specimens.

4. The method of claim 3, wherein the 3D field data represents one or more mechanical and/or thermal states of the specimens, preferably one or more stress distributions and/or temperature distributions.

5. The method of claim 4, wherein the 3D field data comprises data obtained from computational fluid dynamics models (CFD) and/or finite element analysis (FEA) .

6. The method of any preceding claim, comprising the following step:
S7 - Storing further 3D field data related to the parameterizable engineering component to the latent space, using the MLP-VAE.

7. The method of claim 6, wherein the step S7 of storing further 3D field data comprises storing 3D field data of specimens of the parameterizable engineering component not included in the first group of specimens.

8. The method of any preceding claim, wherein the 3D field data comprises point-cloud data.

9. The method of claim 8, comprising the step of pre-processing the 3D field data to transfer the point-cloud data into two-dimensional image data before training the VAE at step S3.

10. The method of any preceding claim, wherein the step S3 of training the VAE comprises generating new data samples by sampling the latent representation from a learned probability distribution over the latent space.

11. The method of claim 10, wherein a reparameterization algorithm is used to propagate gradients through the VAE.

12. The method of any preceding claim, wherein the MLP component of the MLP-VAE is regularized using L2 regularization.

13. The method of any preceding claim, wherein the parameterizable engineering component comprises a turbine blade.

14. A method for generating an engineering component, comprising the following steps:

E1 - engineering an engineering component, involving a plurality of engineering steps in an engineering system (ES), the engineering system (ES) offering one or more design steps for the engineering component in relation to one or more of the engineering steps; and
E2 - storing data generated by the engineering system (ES) in a database (D1, D2) connected to the engineering system (ES), the data including engineering component data relating to the design steps; and
E3 - generating the engineering component using the data stored in the database and using at least one manufacturing device connected to the database;
wherein
step E1 of engineering the engineering component comprises performing a parameter study relating to a geometry of the engineering component, and generating 3D field data and 3D geometry data relating to a group of specimens of the engineering component; and wherein
step E2 comprises storing the 3D field data using the method of any one of claims 1 to 13.

15. The method of claim 14, wherein the 3D field data relating to the group of specimens of the engineering component comprises results of the parameter study.

16. The method of any one of claims 14 and 15, wherein generating 3D field data in step E1 comprises generating computational fluid dynamics models (CFD) and/or finite element analysis models (FEA) of specimens of the parameterizable engineering component.

17. The method of any one of claims 14 to 16, wherein step E3 of generating the engineering component comprises the steps of:

E3a - selecting an individual specimen of the group of specimens of the engineering component at least partially based on results of the parameter study;
E3b - accessing 3D geometry data relating to the selected individual specimen stored in the database;
E3c - transmitting, via a data interface, the 3D geometry data to a control unit of the at least one manufacturing device; and
E3d - using the control unit, controlling the at least one manufacturing device to generate the engineering component according to the 3D geometry data.

18. The method of any one of claims 14 to 17, wherein the engineering component comprises a turbine blade.

FIG 1

FIG 2

(a)

(b)

(c)

(d)

FIG 3

FIG 4

(a)                    (b)

FIG 5

FIG 6

(a)

20

21      22

23   24   25

μ

37

z

σ²

(b)

30

$[x_{p,1}, y_{p,1}, \alpha_{p,1}, \lambda_{p,1},$
$x_{p,2}, y_{p,2}, \alpha_{p,2}, \lambda_{p,2},$
$x_{p,3}, y_{p,3}, \alpha_{p,3}, \lambda_{p,3}]$

31    32   33     34     35    36

EP 4 582 992 A1

## FIG 7

(a)

(b)

## FIG 8

FIG 9

(a)

(b)

# FIG 10

(a)   (b)   (c)

(d)   (e)   (f)

FIG 11

# FIG 12

70 true (T)

71 VAE (T)

72 MLP-VAE (T)

73 true (p)

74 VAE (p)

75 MLP-VAE (p)

(a) design 1    (b) design 2    (c) design 3    (d) design 4    (e) design 5

60    61    62    63    64

**FIG 13**

(a)

(b)

**FIG 14**

(a)     (b)     (c)

Europäisches
Patentamt

European
Patent Office

Office européen
des brevets

**EUROPEAN SEARCH REPORT**

**Application Number**

EP 24 17 6681

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SUNWOONG YANG ET AL: "Inverse design optimization framework via a two-step deep learning approach: application to a wind turbine airfoil", ARXIV.ORG, CORNELL UNIVERSITY LIBRARY, 201 OLIN LIBRARY CORNELL UNIVERSITY ITHACA, NY 14853, 19 August 2021 (2021-08-19), XP091036821, * abstract * * figures 1-3, 5, 7-9; tables 1-3 * * pg. 5, 10-13, 16, 22 section 4.1.1 section 4 * | 1-18 | INV. G06F30/17 G06F30/27 G06N3/045 G06N3/08 ADD. G06F119/14 G06F119/08 |
| A | SAHA SNEHA ET AL: "Exploiting Generative Models for Performance Predictions of 3D Car Designs", 2021 IEEE SYMPOSIUM SERIES ON COMPUTATIONAL INTELLIGENCE (SSCI), IEEE, 5 December 2021 (2021-12-05), pages 1-9, XP034045266, DOI: 10.1109/SSCI50451.2021.9660034 [retrieved on 2021-12-21] * abstract * * section III section V.A, V.B; figures 5-7, 9 * | 1-18 | |
| A | SEUNGYEON SHIN ET AL: "Wheel Impact Test by Deep Learning: Prediction of Location and Magnitude of Maximum Stress", ARXIV.ORG, CORNELL UNIVERSITY LIBRARY, 201 OLIN LIBRARY CORNELL UNIVERSITY ITHACA, NY 14853, 3 October 2022 (2022-10-03), XP091396447, * abstract * * section 3.5.2; figures 1, 9, 13 * | 1-18 | |

**TECHNICAL FIELDS SEARCHED (IPC)**

G06F
G06N

-/--

The present search report has been drawn up for all claims

| Place of search | Date of completion of the search | Examiner |
|---|---|---|
| Munich | 4 November 2024 | Brandiska, Pavlina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt
European
Patent Office
Office européen
des brevets

**EUROPEAN SEARCH REPORT**

**Application Number**

EP 24 17 6681

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | S. PIERRET ET AL: "Turbomachinery Blade Design Using a Navier-Stokes Solver and Artificial Neural Network", TRANSACTIONS OF THE ASME: JOURNAL OF TURBOMACHINERY., vol. 121, no. 2, 1 April 1999 (1999-04-01) , pages 326-332, XP055663122, US ISSN: 0889-504X, DOI: 10.1115/1.2841318 * abstract * * section 2, 4, 5, 8; figure 1 * | 1-18 | |

TECHNICAL FIELDS
SEARCHED       (IPC)

The present search report has been drawn up for all claims

| Place of search | Date of completion of the search | Examiner |
|---|---|---|
| Munich | 4 November 2024 | Brandiska, Pavlina |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons
...................................................................................................
& : member of the same patent family, corresponding
     document

EPO FORM 1503 03.82 (P04C01)